# EUROPEAN PATENT APPLICATION

(11) **EP 1 953 010 A2**
(43) Date of publication of application: **06.08.2008**
(21) Application number: 08001911.0
(22) Date of filing: 01.02.2008
(51) Int. Cl.: B60D 1/18, B63B 21/56, F16G 11/00

(54) **Tow clip**

(30) Priority: 01.02.2007 US 887772 P
(71) Applicant: The Coleman Company, Inc., Wichita, KS 67219 (US)
(72) Inventor: Kelly, Luke E., Augusta, Kansas 67010 (US)
(74) Representative: Cramphorn, Conrad

(57) **Abstract**

A tow clip (10) for quickly and easily connecting a towable vehicle to a tow rope, the tow clip having a base portion (12), a head portion (14), and a T-shaped slot (16) extending through the head portion (14) and into a portion of the base portion (12). The T-shaped slot (16) is configured to receive a loop of a strap connected to a towable vehicle and is further configured to allow a loop of rope to pass through it. The head portion (14) is configured so that a tow rope can be attached to the tow clip (10) by passing a loop of the rope through the T-shaped slot and separating the loop and bringing the loop over and around the head portion. When tension is applied to the distal end of the rope, the head portion (14) engages the rope thereby preventing the loop from passing back over and around the head portion (14) and through the T-shaped slot (16).

## Description

### REFERENCE TO RELATED APPLICATIONS

This application claims priority to U.S. provisional patent application serial Number 60/887,772 filed February 1, 2007, and incorporated herein by reference.

### BACKGROUND OF THE INVENTION

A tow clip is a device used to connect a towable vehicle, such as a watercraft, to a tow line. Examples of items to which a tow clip may be connected include inner tubes, ski tubes, water sleds, and boats. An example of a tow clip is shown in U.S. Patent No. 6,349,960 (the "'960 patent").

A problem with the tow clip shown in the '960 patent is that tow clip is totally enclosed and has no means of attaching to a water sport product or towable, other than the manufacturer threading a strap attached to the towable to the tow clip, and then sewing the free end of the strap back to the towable. Thus, the tow clip is permanently attached to the towable, and is subject to disposal at the end of the life of the product.

### SUMMARY OF THE INVENTION

The following presents a simplified summary of some embodiments of the invention in order to provide a basic understanding of the invention. This summary is not an extensive overview of the invention. It is not intended to identify key/critical elements of the invention or to delineate the scope of the invention. Its sole purpose is to present some embodiments of the invention in a simplified form as a prelude to the more detailed description of some embodiments that are presented later.

In accordance with an embodiment, a tow clip is provided. The tow clip includes two openings, a first for attaching to a structure, such as a tow strap, that is attached to a towable. The second opening is for attaching to a tow line or rope. In an embodiment, a slot connects the two openings. The slot extends to the perimeter of the tow clip, allowing for easy insertion of the tow strap. The slot also allows the removal of the tow clip from the strap at anytime, and permits the tow clip to be transported and assembled to any other water sport product.

In an embodiment, the tow clip includes a T-shaped slot and two wings. The T-shaped slot includes a head and a stem, the stem including a wide section toward the head, and a narrow section toward the front of the tow clip. The head of the T-shaped slot forms the first opening and is configured to attach to the watercraft to be towed, for example to receive a strap of the watercraft to be towed. The wide section forms the second opening, and is configured so that a loop of rope may pass through it. The wings are configured so that, after passing the loop of rope through the wide section, one may place the loop of rope around the narrow section and behind the wings. The wings engage the rope and keep the rope from sliding off the tow clip. In this manner, the rope is secured to the tow clip when tension is applied to the rope.

Other features of the invention will become apparent from the following detailed description when taken in conjunction with the drawings, in which:

### BRIEF DESCRIPTION OF THE DRAWINGS

FIGURE 1 is a top perspective view of a tow clip in accordance with an embodiment;

FIG. 2 is a side view of the tow clip of FIG. 1;

FIG. 3 is a top view of the tow clip of FIG. 1;

FIG. 4 is an alternate embodiment of a tow clip; and

FIG. 5 is a side perspective view of an alternate embodiment of a tow clip.

### DETAILED DESCRIPTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described.

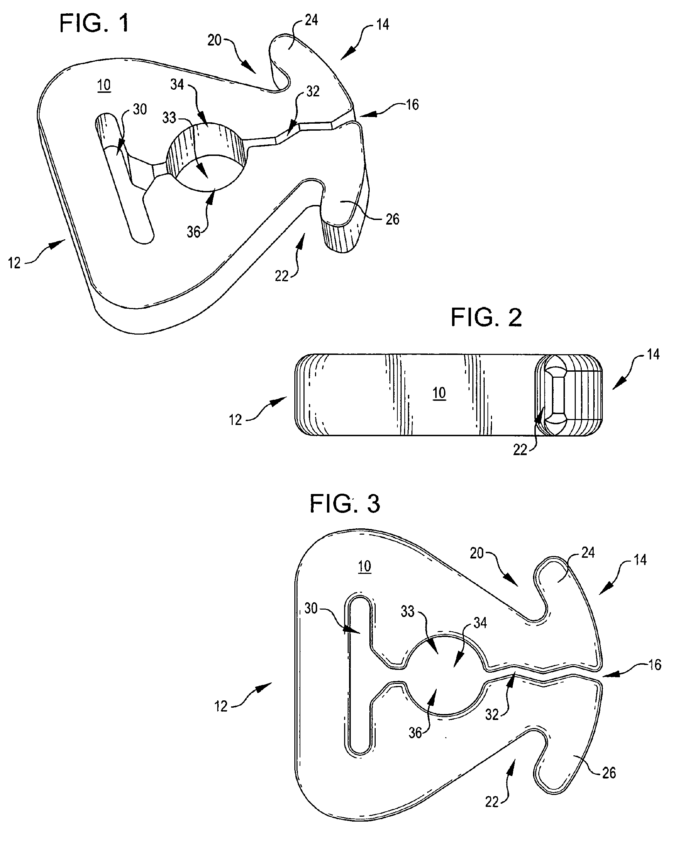

Referring now to the drawings, in which like reference numerals represent like parts throughout the several views, FIG. 1 shows a tow clip 10 in accordance with an embodiment. The tow clip 10 may be generally in the shape of an elongated disk and may be formed from a single piece of material, such as plastic, rubber, or metal. It also may be formed from a material that floats, such as plastic with a density less than that of fresh or salt water. The tow clip 10 includes a base portion 12, a head portion 14, and a T-shaped slot 16. Any edges of the tow clip 10 may be smooth, for example, so as not to puncture an inflatable watercraft or tear material or rope used in conjunction with the tow clip 10.

In the embodiment shown in FIG. 3, the base portion 12 includes a flat side on a rear portion (i.e., opposite the head portion 14) of the tow clip 10. The base portion 12 may be the widest portion of the tow clip 10. The head portion 14 of the tow clip 10 includes a first indentation 20, a second indentation 22, a first wing 24, and a second wing 26. The first indentation 20 is spaced rearward of the first wing 24, and the second indentation 22 is spaced rearward of the second wing 26. The first indentation 20 is a narrowing of the head portion 14 positioned between the first wing 24 and the base portion 12. More specifically, the tow clip 10 tapers inward from the base portion 12 to the first indentation 20, and the second indentation 22. The first wing 24 is a widening of the tow clip 10 just forward of the first indentation 20. Likewise, the second indentation 22 is a narrowing of the head portion 14 positioned between the second wing 26 and the base portion 12 and the second wing 26 is a widening of the tow clip 10 just forward of the second indentation 22. The first wing 24 and second wing 26 may, as shown in the drawings, flare outwardly and rearwardly towards the base portion 12, thereby giving the tow clip 10 a barbed, arrowhead-like shape.

The T-shaped slot 16 is a continuous channel extending from the front toward the rear of the tow clip 10, and includes a head 30, and a stem 32. The head 30 is a narrow channel passing through the tow clip 10 along the base portion 12. In the embodiment shown, the head 30 extends parallel to the rear of the base portion 12.

The stem 32 extends perpendicularly from the head 30 through the head portion 14 of the tow clip 10 and out of the forward end of the tow clip 10. As seen in FIG. 3, the stem 32 may include chamfered edges at the transition to the head 30. Also, in the embodiment shown in FIG. 3, sides of the stem 32 are spaced from each other such that a fabric or other strap may pass through the stem 32.

A portion of the stem 32 may be in the form of a zigzag, but the stem 32 may also be straight, or may be otherwise configured. In addition, the stem 32 may have a wide section 33, such as the wide section 33 shown in FIG. 3 formed from a first notch 34 and a second notch 36. The first notch 34 and the second notch 36 may have the form of semicircles, although other shapes may be used. The first notch 34 and second notch 36 provide a wide opening in the stem 32, and may be configured so that a loop of a typical rope (not shown) used for towing watercraft may pass through the first and second notches 34, 36. For example, the first notch 34 and the second notch 36 may both be semicircles having a radius approximately equal to the diameter of a typical tow rope so that two cross sections of the rope may fit in the notches 34, 36.

To use the tow clip 10, a strap attached to a towable vehicle, such as a watercraft, is first attached to the tow clip 10. For example, two ends of a strap may be attached to a towable watercraft so as to form a loop. The loop of the strap may be manipulated through the stem 32, from the head portion 16 to the base portion 14 until the strap is positioned in the head 30 of the T-shaped slot 16. For example, the wing 26 may be inserted into the loop of the strap such that a portion of the loop of the strap passes through the stem 32. The loop of the strap may then be moved along the stem 32 towards the base portion 12. The loop of the strap may then be moved along the chamfered edge of the stem 32 opposite the wing 26 until a portion of the loop of the strap is positioned in the portion of the head 30 opposite the wing 26. The remaining portion of the loop of the strap may then be moved into the portion of the head 30 opposite the wing 24. A strap can be similarly attached to the tow clip 10 by first inserting the wing 24 into a loop of the strap and moving the loop of the strap into the head 30 similarly.

As an alternative, the tow clip 10 may be configured so that a rope may be used instead of a strap. For example, the head 30 and stem 32 may be wide enough for a rope to pass through. In this instance, a rope or strap or both could be used to attach the tow clip 10 the towable vehicle. In addition, as another alternative, the stem 32 may also have no width unless the tow clip 10 is manipulated in a particular manner, for example, by pulling the head portion 14 in opposite directions in order to make the stem 32 wider. With this configuration, the tow clip 10 would be less likely to inadvertently detach from the towable vehicle. Other shapes and sizes of the features of the tow clip 10 may also be used. As an example, the wide portion 33, first and second indentations 20, 22, and other parts may be configured to accommodate different sizes of rope or other items used for towing. In addition, the first notch 34 and second notch 36 need not be of identical size and shape or the wide portion 33 may rest completely on one side of the stem 32.

In any event, the head 30 serves as a first opening into which a structure, such as a tow strap, may be connected. The slot 16 permits the strap to be inserted into the opening at a central portion of the strap. Thus, the strap does not have to be detached from a towable to install the tow clip 10. The slot 16 also allows the removal of the tow clip from the strap at anytime, and permits the tow clip to be transported and assembled to any other water sport product, such as a towable. Moreover, and importantly, a strap may be attached via the slot 16, but the slot 16 is opposite the head 30. In this manner, when a strap is connected to the tow clip 10 and pulled from the base portion end, there is no danger of the strap passing out of the slot 16.

Once the tow clip 10 is attached to the strap, a user may then secure a tow rope (not shown) to the head portion 14 of the tow clip 10. Attachment of the tow clip 10 to the tow rope may be made in a manner similar to that shown in U.S. Patent No. 6,349,960. In particular, a typical tow rope, such as a ski tow rope, includes a loop formed in one end of the rope. To attach such a tow rope to the tow clip 10, the loop of the tow rope is passed through the first and second notches 34, 36 until a portion of the loop protrudes through the tow clip 10.

The protruding part of the loop can then be separated and opposite sides of the loop can be wrapped and looped over and around the front end of the tow clip 10, around the wings 24, 26. The rope is then tensioned to pull the opposite sides of the loop into the first indentation 20 and second indentation 22. In this manner, the tow clip 10 provides a quick and easy way to securely attach a rope to a watercraft for towing. A user may then pull a distal end of the rope away from the head portion 14, perhaps by securing the rope to a motorboat, in order to tow the watercraft.

While using the tow clip 10 to tow the watercraft, the wings 24, 26 engage the rope, securing it in the indentations 20, 22, thereby preventing the loop of rope from passing over the head portion 14 and through the notches 34, 36. In an embodiment, when tension is applied to the tow rope, the rope may apply lateral pressure thereby narrowing or closing the stem 32 of the T-shaped slot 16. This provides further assurance that the rope will stay secured to the tow clip 10 and that a strap attached at the head 30 cannot slide out of the slot 16. Alternatively, the tow clip 10 may be made of rigid material, such as metal, so that the slot 22 does not substantially narrow or close when tension is applied to the rope.

To detach the tow clip 10 from the rope one simply follows the steps for attachment in reverse. In particular, one may bring the loop of rope back over the head portion 14 and then pull the loop of rope through the notches 34, 36. If desired, a user may then pull the strap away from the head 30 and through the stem 32 until the strap is free from the tow clip 10.

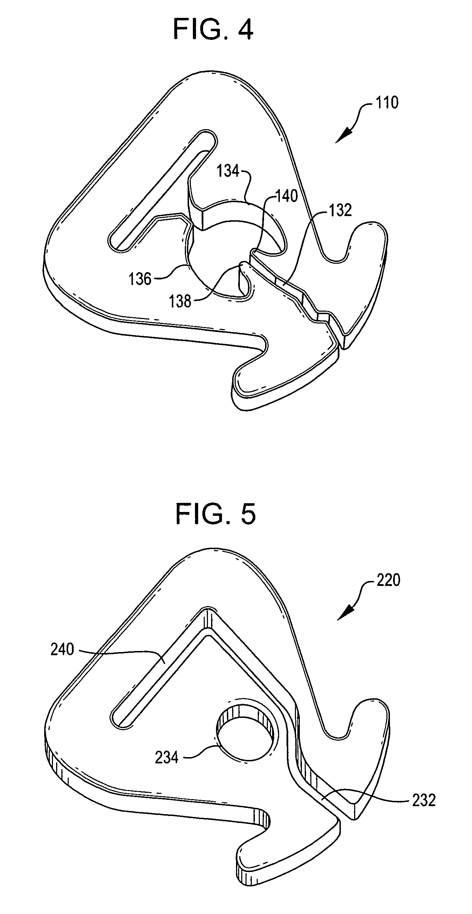

An alternate embodiment of a tow clip 110 is shown in FIG. 4. The tow clip 110 includes similar features to the tow clip 10 shown in FIG. 1, with an alteration to the first and second notches 34, 36. Specifically, the notches 134, 136 for the tow clip 110 include rearward projecting flares 138, 140 at the stem 132. These flares prevent a tow rope that is attached to the tow clip from being pulled into the stem 132, potentially pulling it apart. Instead, the flares 138, 140 drive the loops of the tow rope outward of the flares, and thus away from the stem 132. In addition, pulling on the tow rope causes the loops to pull inward on the inside edges of the flares 138, 140, driving the stem 132 to close.

FIG. 5 shows an alternate embodiment of a tow clip 220. For the tow clip 220, a slot 232 extends from a head portion of the tow clip back towards a base portion, but around an opening 234 for attaching a tow rope. The slot 232 turns at approximately a right angle to provide the head 240 of the slot. This head 240 may receive, for example, a strap attached to a towable.

For the embodiment shown in FIG. 5, the structure of the opening 234 is not affected by the slot 232, because the slot is routed around the opening. In this manner, a tow rope attached to the head end of the tow clip 220 does not affect the slot.

Other variations are within the spirit of the present invention. Thus, while the invention is susceptible to various modifications and alternative constructions, a certain illustrated embodiment thereof is shown in the drawings and has been described above in detail. It should be understood, however, that there is no intention to limit the invention to the specific form or forms disclosed, but on the contrary, the intention is to cover all modifications, alternative constructions, and equivalents falling within the spirit and scope of the invention, as defined in the appended claims.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A tow clip, comprising:
a base portion having a first opening for receiving a strap or rope that is connected to a towable;
a head portion connected to the base portion and configured for attachment to a tow rope; and
a slot extending from the head portion to the first opening.

2. The tow clip of claim 1, wherein the head portion comprises a second opening for receiving a tow rope.

3. The tow clip of claim 2, wherein the second opening is formed in the slot.

4. The tow clip of claim 3, wherein the tow clip defines an axis extending from the head portion to the base portion, and wherein the first opening comprises an elongate slot extending substantially perpendicular to the axis.

5. The tow clip of claim 3, wherein the second opening is formed from notches in opposite sides of the slot.

6. The tow clip of claim 5, wherein the second opening comprises protrusions on opposite sides of the slot toward the head portion of the tow clip.

7. The tow clip of claim 3, wherein the second opening comprises protrusions on opposite sides of the slot toward the head portion of the tow clip.

8. The tow clip of claim 1, wherein opposite sides of the head portion comprise:
a wing at a forward end of the head portion; and
an indentation spaced rearward of the wing.

9. The tow clip of claim 8, wherein each wing flares outward and rearward toward the base portion.

10. The tow clip of claim 8, wherein the tow clip comprises a flexible material so that when a tow rope is attached around the head portion and tension is applied to the tow rope, the slot closes in width.

11. The tow clip of claim 1, wherein the first opening is elongate and extends substantially parallel to a rear surface of the base portion.

12. The tow clip of claim 1, wherein the tow clip comprises a flexible material so that when a tow rope is attached around the head portion and tension is applied to the tow rope, the slot closes in width.

13. The tow clip of claim 1, wherein the slot is zigzag in configuration.

14. The tow clip of claim 1, wherein the head portion comprises a second opening for receiving the tow rope, and wherein the slot extends around the second opening, bypassing the second opening.
